# FASCICULE DE BREVET EUROPEEN

(11) **EP 2 833 006 B1**
(45) Date de publication et mention de la délivrance du brevet: **14.09.2016**
(21) Numéro de dépôt: 14179044.4
(22) Date de dépôt: 30.07.2014
(51) Int. Cl.: F16B 31/02, B23G 9/00, B21H 3/02, B23B 27/04

(54) **Vis à couple de serrage limité**
Schraube mit begrenztem Anzugsdrehmoment
Screw with limited torque

(30) Priorité: 31.07.2013 FR 1357571
(43) Date de publication de la demande: 04.02.2015
(73) Titulaire: Decorec, 74800 Amancy (FR)
(72) Inventeur: Aguesse, Damien, 74960 Meythet (FR); Aguesse, Laurent, 74940 Annecy le Vieux (FR); Borde, Julien, 74600 Seynod (FR); Cuvelier, Christophe, 74800 La Roche sur Foron (FR); Fourel, Didier, 74800 La Roche sur Foron (FR)
(74) Mandataire: Cabinet Poncet

(56) Documents cités:
- EP-A1- 0 796 680
- FR-A1- 2 486 852
- FR-A1- 2 971 634
- US-A- 3 595 124
- US-A1- 2009 285 644

## Description

La présente invention concerne une vis à couple de serrage limité.

Dans le domaine de la connectique, beaucoup de connexions électriques sont réalisées à l'aide de vis. Ces vis peuvent servir à serrer un conducteur dénudé sur un support métallique conducteur ou bien à serrer un conducteur non dénudé avec ou sur un mors métallique muni de dents adaptées pour perforer la gaine isolante dont est enrobé le conducteur non dénudé. Que ce soit dans le cas de dispositifs de connexion à moyens de perforation de gaine isolante d'un conducteur non dénudé ou dans le cas du simple serrage ou écrasement d'un conducteur dénudé, la qualité de la connexion est prépondérante et est donnée par la qualité du serrage dont l'un des paramètres majeurs est le couple de serrage.

Pour optimiser la qualité du serrage, on connaît des vis de serrage, appelées couramment vis à tête fusible, permettant d'obtenir un couple de serrage prédéterminé sans obliger un opérateur à utiliser une clé dynamométrique.

De façon connue, une telle vis comporte, sur un même axe, une tige filetée, une tête de desserrage à section transversale destinée à coopérer avec un outil pour permettre le desserrage de la vis, et une tête de serrage à section transversale destinée à coopérer avec un outil pour permettre le serrage de la vis jusqu'à un couple de serrage prédéterminé, la tête de desserrage et la tête de serrage étant séparées l'une de l'autre par un tronçon intermédiaire à portion ruptible réalisé par une étape de tournage, conformée et dimensionnée pour se rompre une fois atteint le couple de serrage prédéterminé.

Pour que la portion ruptible se rompe convenablement une fois atteint le couple de serrage prédéterminé, il faut éviter que l'outil utilisé par l'opérateur lors du serrage vienne simultanément en prise sur la tête de serrage et sur la tête de desserrage. En effet, la tête de serrage et la tête de desserrage sont alors solidarisées en rotation par le biais de l'outil de serrage et non plus seulement par la portion ruptible qui est alors inopérante.

Pour éviter cet inconvénient, on connaît une vis à couple de serrage limité selon le préambule de la revendication 1 et telle qu'illustrée dans le document FR 2 971 634 A1. Dans ce document, la tête hexagonale de serrage est munie à sa base de quatre excroissances disposées sur deux faces opposées de la tête de serrage hexagonale.

Ces excroissances servent de moyens de butée destinés à empêcher une douille de serrage de venir simultanément en prise sur la tête de serrage et sur la tête de desserrage.

Toutefois, une telle vis à couple de serrage limité présente sur ses têtes de serrage et de desserrage deux paires de faces opposées dépourvues de toute excroissance ou moyens de butée axiale. Il est donc encore possible, pour un opérateur utilisant une clé plate lors du serrage, de venir simultanément en prise sur la tête de serrage et sur la tête de desserrage. La portion ruptible est alors rendue inopérante et le couple de serrage peut alors être soit trop faible soit trop élevé, de sorte que la connexion électrique ne sera pas satisfaisante.

De plus, ces excroissances sont réalisées lors d'une étape de reprise de la vis à couple de serrage limité, après que celle-ci ait été réalisée par tournage. Une telle étape de reprise nécessite un poste de travail supplémentaire spécifique et des manipulations supplémentaires par un opérateur dédié, ce qui augmente le temps et les coûts de fabrication.

Les documents US 3,595,124 A et AU 2006 235 763 A1 décrivent une solution alternative permettant d'éviter qu'un outil utilisé par l'opérateur lors du serrage vienne simultanément en prise sur la tête de serrage et sur la tête de desserrage. Cette solution alternative consiste à prévoir une tête de serrage à section transversale de dimensions plus petites que les dimensions de la section transversale de la tête de desserrage.

Si une telle solution paraît séduisante, elle oblige néanmoins à partir d'une pièce métallique cylindrique avec une section transversale de dimensions au moins égales aux dimensions de la section transversale de la tête de desserrage. Pour réaliser la tête de serrage, on doit donc procéder à un enlèvement de matière conséquent, ce qui gâche inutilement de la matière et augmente le temps et les coûts de fabrication.

Le document EP 0 796 680 A1 concerne la fabrication de goujons ou tirants filetés mais n'a pas pour objet la fabrication d'une vis à couple de serrage limité à portion ruptible.

Un problème proposé par l'invention est de concevoir une vis à couple de serrage limité utilisable sans risque qu'un outil de serrage tel qu'une clé plate ou une douille de vissage puisse venir simultanément en prise sur la tête de serrage et sur la tête de desserrage.

Simultanément, l'invention vise à concevoir une vis à couple de serrage limité dont la fabrication est rapide et peu onéreuse.

Pour atteindre ces objets, ainsi que d'autres, l'invention propose une vis à couple de serrage limité fabriquée en un matériau malléable et comportant, sur un même axe, une tige filetée, une tête de desserrage cylindrique à section transversale destinée à coopérer avec un outil pour permettre le desserrage de la vis, et une tête de serrage cylindrique à section transversale destinée à coopérer avec un outil pour permettre le serrage de la vis jusqu'à un couple de serrage prédéterminé, la tête de desserrage et la tête de serrage étant séparées l'une de l'autre par un tronçon intermédiaire à portion ruptible conformée et dimensionnée pour se rompre une fois atteint le couple de serrage prédéterminé, dans laquelle :
- la tête de desserrage et la tête de serrage ont des sections transversales extérieures non circulaires et de mêmes dimensions,
- la tête de desserrage et la tête de serrage ont des surfaces latérales respectives situées en correspondance les unes des autres,
selon l'invention :
- le tronçon intermédiaire comporte au moins une collerette continue ou discontinue en ledit matériau malléable repoussé,
- ladite au moins une collerette présente des dépassements s'étendant radialement au-delà de la section transversale de la tête de desserrage et de la tête de serrage,
- les dépassements sont répartis de façon régulière selon toute la périphérie du tronçon intermédiaire.

Ladite au moins une collerette, qui présente des dépassements radiaux répartis de façon régulière sur toute la périphérie du tronçon intermédiaire, constitue ainsi des moyens de butée empêchant efficacement la venue en prise d'une douille de vissage ou d'une clé plate simultanément sur la tête de serrage et sur la tête de desserrage.

Dans le cas de têtes de serrage et de desserrage polygonales, ladite au moins une collerette présente des dépassements répartis de façon suffisamment régulière de façon qu'il se trouve un dépassement au moins à chaque paire de faces latérales opposées de la tête de serrage ou de la tête de desserrage.

Le fait que ladite au moins une collerette soit en matériau malléable repoussé évite d'avoir à réaliser ladite au moins une collerette par un enlèvement de matière sur toute la longueur d'un axe de gros diamètre extérieur, ce qui gâcherait inutilement de la matière. En effet, lors du repoussage, on utilise une partie de la matière constitutive d'un axe de diamètre extérieur relativement plus petit, en repoussant cette matière constitutive selon la direction longitudinale de l'axe (en direction de la tête de serrage ou en direction de la tête de desserrage, voire les deux), ce qui déplace simultanément de la matière radialement vers l'extérieur pour former les dépassements. Et ladite collerette n'est ainsi pas réalisée par l'ajout d'une pièce rapportée lors d'une opération de reprise qui augmenterait le temps et les coûts de fabrication.

La fabrication d'une telle collerette sensiblement annulaire (puisque pouvant être continue ou discontinue) est facile à réaliser par tournage, procédé auquel est déjà soumise la vis à couple de serrage limité lors de sa fabrication pour réaliser au moins la portion ruptible du tronçon intermédiaire, de sorte que la fabrication de ladite au moins une collerette ne nécessite pas en elle-même une reprise en usinage, contrairement aux excroissances de la vis à couple de serrage limité du document FR 2 971 634 A1.

Lors de cette fabrication par tournage, on peut directement partir d'une pièce comportant un tronçon cylindrique à section transversale non circulaire dont la surface latérale constituera les surfaces latérales de la tête de desserrage et de la tête de serrage, ces dernières ayant des sections transversales extérieures de mêmes dimensions et des surfaces latérales respectives situées en correspondance les unes des autres. On évite ainsi d'avoir à retirer de la matière de la pièce de départ pour parvenir aux surfaces latérales respectives des têtes de desserrage et de serrage, ce qui est économique.

De préférence, la vis peut être fabriquée en métal. De bons résultats ont été obtenus avec un acier de la nuance 11SMnPb37. L'utilisation de métal permet un repoussage de matière sans effort trop important. Elle permet simultanément de réaliser une butée fiable et résistante sous la forme de ladite au moins une collerette qui, fabriquée par repoussage (ou fluage) de métal, est écrouie et par conséquent plus difficile à déformer de façon inverse.

Avantageusement, la tête de desserrage et la tête de serrage peuvent avoir des sections transversales extérieures hexagonales. Un seul et même outil est ainsi utilisable pour serrer et desserrer la vis à couple de serrage limité.

Selon un autre aspect de l'invention, il est proposé un procédé de fabrication d'une vis telle que décrite précédemment ; selon l'invention, le procédé comporte les étapes suivantes :
a) fournir un axe muni d'un tronçon cylindrique à section transversale non circulaire et à surface latérale destinée à constituer les surfaces latérales de la tête de desserrage et de la tête de serrage,
b) mettre en rotation ledit axe selon sa direction longitudinale,
c) approcher radialement un outil contre l'axe en rotation jusqu'à venir radialement en appui contre l'axe pour former ladite au moins une collerette en repoussant de la matière constitutive de l'axe selon la direction longitudinale de l'axe.

Un tel procédé permet la fabrication de ladite au moins une collerette par tournage, ce qui permet un usinage rapide et économique de la vis.

Lors de cette fabrication par tournage, on part directement d'une pièce comportant un tronçon cylindrique à section transversale non circulaire dont la surface latérale constituera les surfaces latérales de la tête de desserrage et de la tête de serrage. On évite ainsi d'avoir à retirer de la matière de la pièce de départ pour parvenir aux surfaces latérales respectives des têtes de desserrage et de serrage, ce qui est économique.

Avantageusement, le procédé peut comporter, entre les étapes b) et c), une étape b1) au cours de laquelle on forme, sur le tronçon cylindrique destiné à constituer la tête de desserrage et la tête de serrage, un tronçon intermédiaire à section transversale circulaire.

Une telle étape permet d'éviter un usinage à chocs pour l'outil venant réaliser l'étape c).

Selon un premier mode de réalisation de procédé de fabrication selon l'invention, lors de l'étape c), on peut utiliser une molette à profil transversal convexe qui est pressée radialement contre l'axe pour y former une gorge en repoussant de la matière constitutive de l'axe d'un côté au moins de ladite gorge.

Une molette est un outil standard, peu onéreux et capable de repousser efficacement la matière constitutive de l'axe pour former ladite au moins une collerette.

De préférence, lors de l'étape c), de la matière constitutive de l'axe peut être repoussée de part et d'autre de la molette, qui présente de préférence un profil transversal en V.

La molette travaille ainsi de façon équilibrée lors de l'étape c), ce qui limite les risques de détérioration de la molette. Pour un travail le plus équilibré possible, la molette peut présenter un profil transversal symétrique, par exemple en V.

De préférence, on peut creuser dans le tronçon intermédiaire à section transversale circulaire, lors d'une étape ultérieure d), une gorge de rupture conformée et dimensionnée pour se rompre une fois atteint le couple de serrage prédéterminé.

Avantageusement, la gorge de rupture peut être creusée dans l'axe à distance de la matière repoussée. On évite ainsi de creuser la gorge de rupture dans une zone de l'axe ayant subi un écrouissage, afin de limiter l'usure des outils de coupe utilisés pour la fabrication de la gorge de rupture, et afin de garantir une valeur précise du couple de serrage prédéterminé produisant la rupture de la vis au droit de la gorge.

Dans un deuxième mode de réalisation de l'invention, lors du repoussage de l'étape c), on peut creuser simultanément une gorge de rupture conformée et dimensionnée pour se rompre une fois atteint le couple de serrage prédéterminé. La formation simultanée de la gorge de rupture et de ladite au moins une collerette permet de réduire efficacement le temps d'usinage et le nombre d'outils nécessaires.

Dans le cadre du deuxième mode de réalisation selon l'invention, lors de l'étape c), on peut utiliser un outil combiné d'usinage comprenant une extrémité distale à profil longitudinal sensiblement en U comportant :
- une arête distale de coupe,
- d'un premier côté de l'arête distale de coupe, une arête latérale de coupe s'étendant en direction d'une extrémité proximale d'outil,
- de l'autre côté de l'arête distale de coupe, une arête latérale s'étendant en direction de l'extrémité proximale d'outil, et depuis laquelle s'étend une facette latérale de repoussage de matière.

Selon un autre aspect, l'invention a pour objet un outil combiné d'usinage pour la mise en oeuvre du procédé selon le deuxième mode de réalisation de l'invention, ledit outil combiné d'usinage comprenant une extrémité distale à profil longitudinal sensiblement en U comportant :
- une arête distale de coupe,
- d'un premier côté de l'arête distale de coupe, une arête latérale de coupe s'étendant en direction d'une extrémité proximale d'outil,
- de l'autre côté de l'arête distale de coupe, une arête latérale s'étendant en direction de l'extrémité proximale d'outil, et depuis laquelle s'étend une facette latérale de repoussage de matière.

Lors de l'utilisation d'un tel outil, l'arête distale de coupe et l'arête latérale de coupe permettent de creuser la gorge de rupture du tronçon ruptible de la vis tandis que, simultanément, la facette latérale de repoussage de matière vient former ladite au moins une collerette sensiblement continue par la création de dépassements de façon régulière selon toute la périphérie du tronçon intermédiaire.

De préférence, la facette latérale de repoussage de matière peut présenter un angle de dépouille négatif. L'angle de dépouille négatif permet à la facette latérale de repoussage de matière de venir au contact de l'une des faces latérales de la gorge de rupture pour y provoquer un repoussage ou fluage de matière selon la direction longitudinale de l'axe.

D'autres objets, caractéristiques et avantages de la présente invention ressortiront de la description suivante de modes de réalisation particuliers, faite en relation avec les figures jointes, parmi lesquelles :
- les figures 1 à 5 sont des vues de côté illustrant un premier mode de réalisation de procédé de fabrication d'une vis à couple de serrage limité ;
- la figure 6 est une vue de côté d'un premier mode de réalisation de vis à couple de serrage limité selon l'invention, obtenu par le procédé illustré à l'aide des figures 1 à 5 ;
- la figure 7 est une vue en perspective de la vis à couple de serrage limité de la figure 6 ;
- la figure 8 est une vue de côté d'une variante du premier mode de réalisation de vis à couple de serrage limité illustré sur les figures 6 et 7, et qui peut être obtenue par un procédé similaire à celui illustré à l'aide des figures 1 à 5 ;
- la figure 9 est une vue de côté destinée à illustrer d'autres variantes du premier mode de réalisation de vis à couple de serrage limité illustré sur les figures 6, et qui peuvent être obtenues par un procédé similaire à celui illustré à l'aide des figures 1 à 5 ;
- les figures 10 à 12 sont des vues de côté d'un deuxième mode de réalisation de procédé de fabrication d'une vis à couple de serrage limité ;
- la figure 13 est une vue de côté d'un deuxième mode de réalisation de vis à couple de serrage limité selon l'invention, obtenu par le procédé illustré à l'aide des figures 10 à 12 ;
- la figure 14 est une vue en perspective de la vis à couple de serrage limité de la figure 13 ;
- la figure 15 est une vue de côté d'une variante du deuxième mode de réalisation de vis à couple de serrage limité illustré sur les figures 13 et 14, et qui peut être obtenue par un procédé similaire à celui illustré à l'aide des figures 10 à 12 ;
- les figures 16 et 17 sont deux vues en détail en perspective, prises selon des angles différents, de l'extrémité distale d'un outil combiné d'usinage utilisé sur les figures 10 et 11.

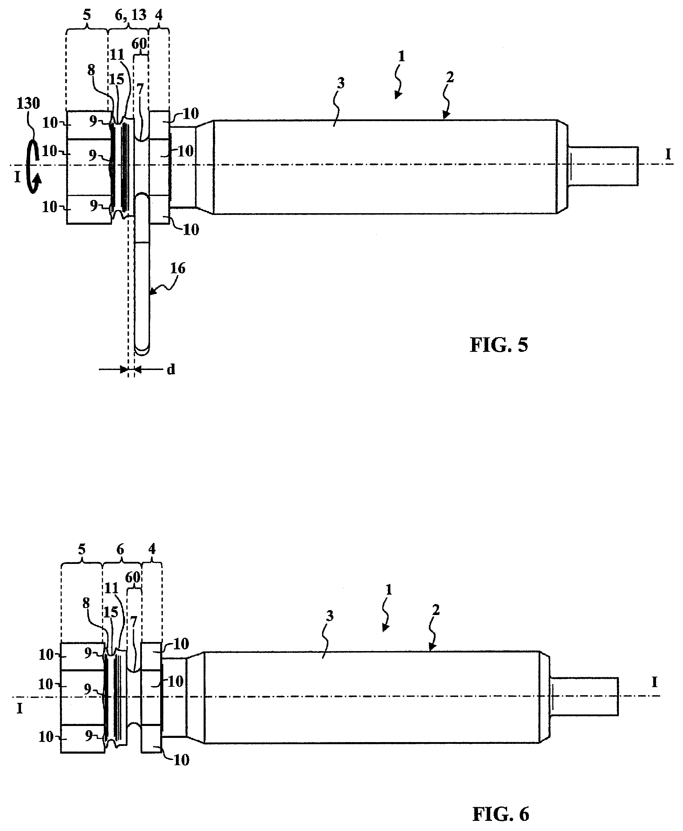

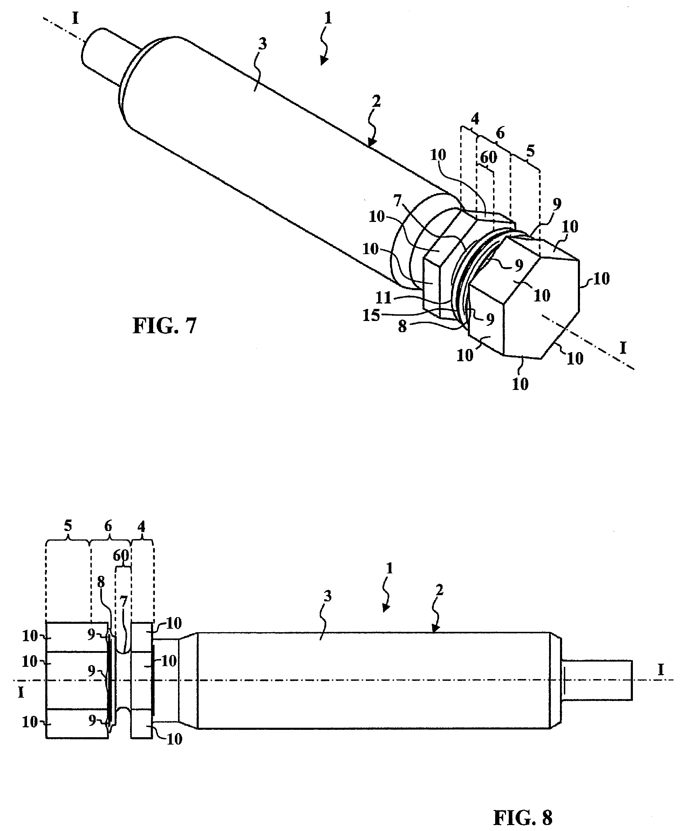

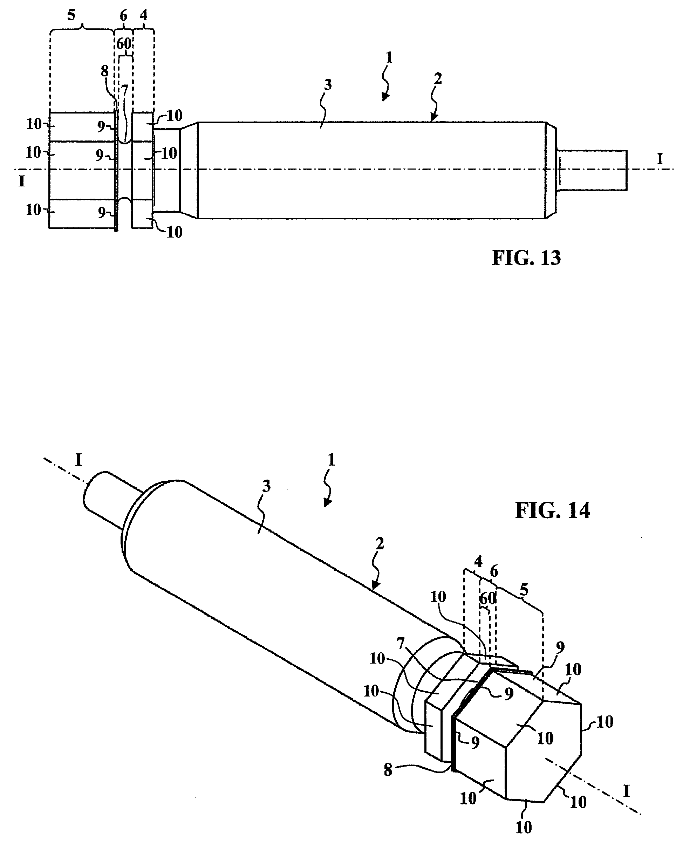

Sur les figures 6 et 7 d'une part et sur les figures 13 et 14 d'autre part, sont illustrés respectivement un premier et un deuxième mode de réalisation de vis 1 à couple de serrage limité fabriquée en un matériau malléable (par exemple en métal ou en un matériau synthétique renforcé par des fibres) et comportant, sur un même axe 2 (s'étendant selon une direction longitudinale I-I ou direction d'allongement), une tige filetée 3, une tête de desserrage 4 à section transversale destinée à coopérer avec un outil pour permettre le desserrage de la vis 1, et une tête de serrage 5 à section transversale destinée à coopérer avec un outil pour permettre le serrage de la vis 1 jusqu'à un couple de serrage prédéterminé. La tête de desserrage 4 et la tête de serrage 5 sont séparées l'une de l'autre par un tronçon intermédiaire 6 à portion ruptible 60 conformée et dimensionnée pour se rompre une fois atteint le couple de serrage prédéterminé. Pour ce faire, la portion ruptible 60 comporte une gorge de rupture 7.

Sur les figures 6, 7, 13 et 14, le tronçon intermédiaire 6 comporte au moins une collerette 8 continue ou discontinue en matériau malléable repoussé, ledit matériau malléable repoussé étant celui de l'axe 2.

Sur les figures 6 et 7, le tronçon intermédiaire 6 comporte une collerette 8 et une collerette 11, tandis que, sur les figures 13 et 14, le tronçon intermédiaire 6 ne comporte qu'une collerette 8, la collerette 11 ayant été retirée lors du creusement de la gorge de rupture 7.

La collerette 8, et le cas échéant la collerette 11, présente des dépassements 9 s'étendant radialement au-delà de la section transversale de la tête de desserrage 4 et de la tête de serrage 5. Les dépassements 9 sont répartis de façon régulière selon toute la périphérie du tronçon intermédiaire 6.

Sur les figures, la tête de desserrage 4 et la tête de serrage 5 ont des sections transversales non circulaires, hexagonales en l'occurrence, et de mêmes dimensions. La tête de desserrage (4) et la tête de serrage (5) ont des surfaces latérales respectives, comportant six faces latérales 10, situées en correspondance les unes des autres.

La collerette 8, et le cas échéant la collerette 11, présente des dépassements 9 radiaux au-delà de chacune des six faces latérales 10 de la tête de serrage 5 (et donc aussi au-delà de chacune des six faces latérales de la tête de desserrage 4, les têtes de serrage 5 et de desserrage 4 étant de mêmes dimensions transversales).

En d'autres termes, les dépassements 9 sont répartis de façon suffisamment régulière de sorte qu'au moins un dépassement 9 est disposé en correspondance d'une au moins des faces de chacune des paires de faces latérales 10 de la tête de serrage 5 et de la tête de desserrage 4.

De cette façon, il est impossible pour un opérateur d'engager une clé plate ou une douille de vissage en prise simultanée sur la tête de serrage 5 et sur la tête de desserrage 4, de sorte que la portion ruptible 60 est assurée de rester opérationnelle lors du vissage de la vis 1 par la tête de serrage 5.

On constate que dans le mode de réalisation illustré sur les figures 6 et 7, la collerette 8 est discontinue, celle-ci s'interrompant localement au voisinage de la jonction de deux faces latérales 10 de la tête de serrage 5. La collerette 11 est quant à elle continue (autrement dit annulaire).

Dans le mode de réalisation illustré sur les figures 13 et 14, la collerette 8 est continue, c'est-à-dire qu'elle présente des dépassements 9 se faisant suite de façon continue selon toute la périphérie du tronçon intermédiaire 6. La collerette 8 semble ainsi présenter un seul dépassement radial au-delà de la section transversale de la tête de serrage 5 et selon toute la périphérie de cette dernière.

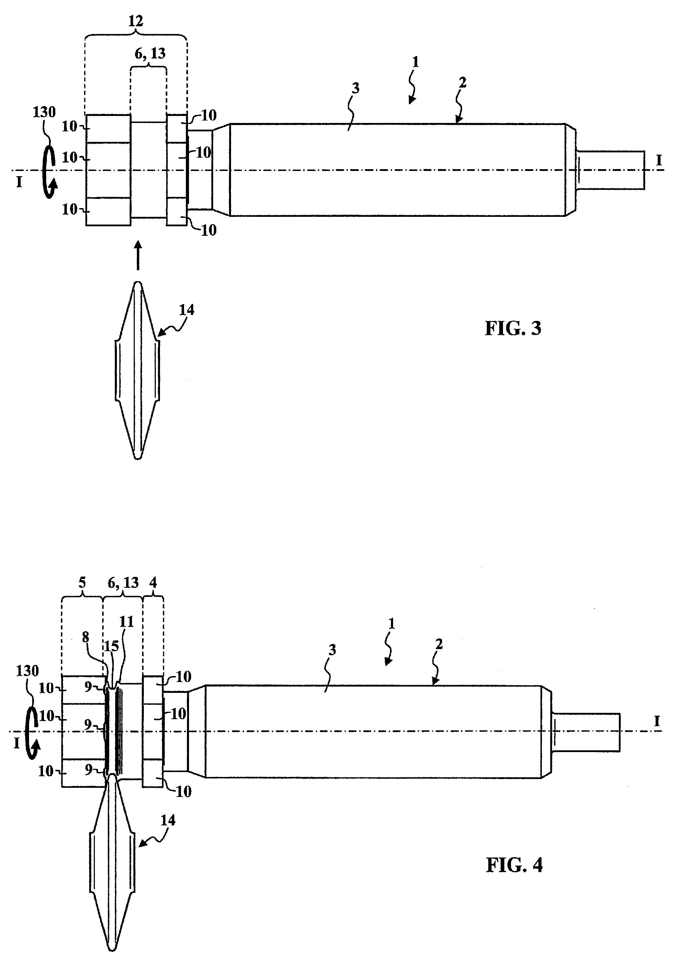

Dans le mode de réalisation de la figure 6, on constate que la collerette 11 présente des dimensions identiques à celles de la collerette 8. La collerette 11 provient du procédé de fabrication de collerette 8 sur la vis 1 comme il sera expliqué ultérieurement et plus en détails à l'aide des figures 3 et 4.

Sur la figure 8 est illustrée une première variante du premier mode de réalisation de vis 1, celle-ci se distinguant par l'absence de collerette 11, absence qui provient de la réalisation de la gorge de rupture 7 au droit de la collerette 11 plutôt que légèrement à côté comme sur la vis 1 des figures 6 et 7.

Sur les figures 6 à 8, la collerette 8 est adjacente à la tête de serrage 5. On peut toutefois « inverser » le tronçon intermédiaire 6 selon la direction longitudinale I-I en réalisant la collerette 8 adjacente à la tête de desserrage 4.

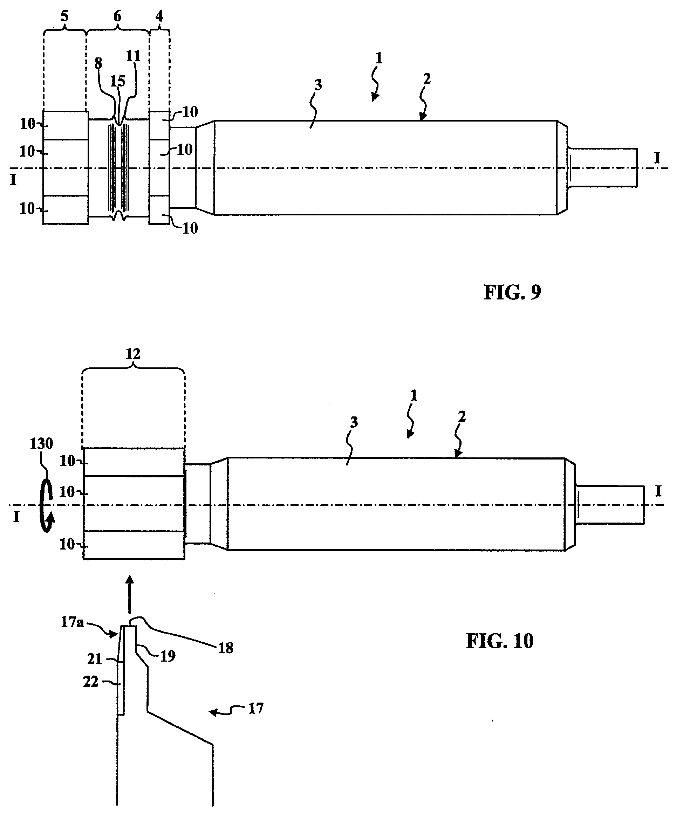

Sur la figure 9 est illustrée une vis 1 en cours de fabrication et pouvant aboutir à quatre autres variantes du premier mode de réalisation de vis 1. Ces variantes se distinguent par le fait que les collerettes 8 et 11 sont effectuées sur le tronçon intermédiaire 6 à distance de la tête de serrage 5 et de la tête de desserrage 4. Par la suite, la portion ruptible 60 est réalisée par le creusement d'une gorge de rupture 7. Cette gorge de rupture 7 pourra être creusée :
- entre la tête de serrage 5 et la collerette 8 ;
- au droit de la collerette 8 (en venant éliminer la collerette 8) ;
- au droit de la collerette 11 (en venant éliminer la collerette 11) ;
- entre la collerette 11 et la tête de desserrage 4.

Dans tous les modes de réalisation illustrés sur les figures 6 à 9, 13 et 14, la collerette 8 (et le cas échéant la collerette 11) est en matériau malléable (métal par exemple) repoussé selon la direction longitudinale I-I de l'axe 2.

La collerette 8, et le cas échéant la collerette 11, est formée par repoussage de matière. De ce fait, la collerette 8, et le cas échéant la collerette 11, peut être obtenue par le fluage d'une faible quantité de matière constitutive de l'axe 2 mais présentera néanmoins des caractéristiques mécaniques lui procurant une résistance suffisante pour jouer son rôle de butée du fait que la matière constituant la collerette 8 (ou 11) subit un écrouissage.

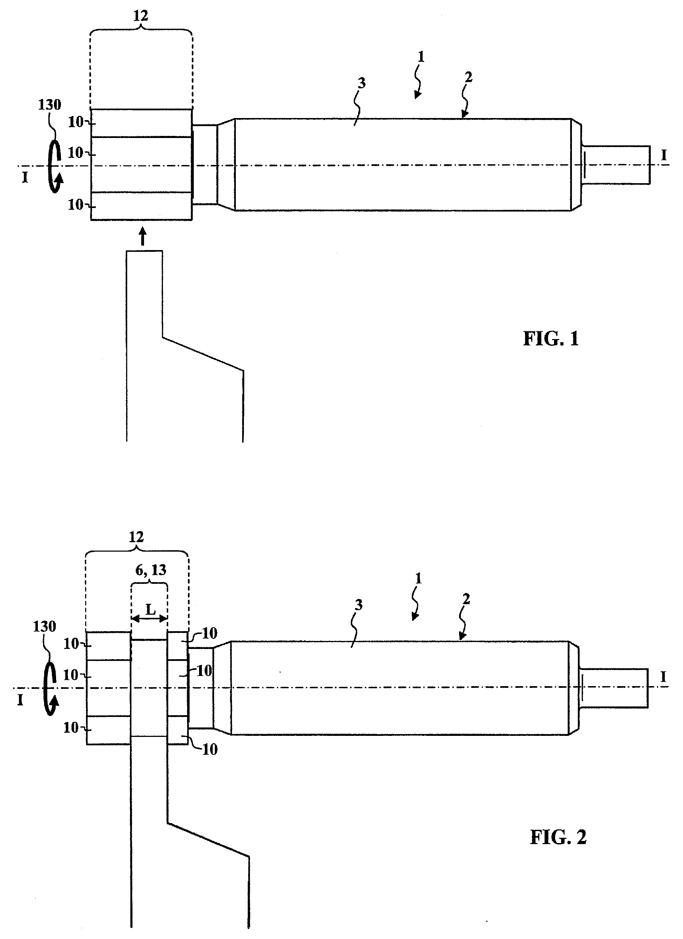

Le procédé de fabrication de la vis 1 illustré sur les figures 6 et 7 va désormais être illustré au moyen des figures 1 à 5.

Lors de ce premier mode de réalisation de procédé de fabrication, on exécute les étapes suivantes :
a) fournir un axe 2 muni d'un tronçon cylindrique 12 à section transversale non circulaire et à surface latérale destinée à constituer les surfaces latérales de la tête de desserrage 4 et de la tête de serrage 5 (figure 1),
b) mettre en rotation ledit axe 2 selon sa direction longitudinale I-I selon un mouvement illustré par la flèche 130, au moyen d'un tour par exemple (figure 1),
b1) former sur le tronçon cylindrique 12 un tronçon intermédiaire à section transversale circulaire 13 (figure 2),
c) approcher radialement un outil contre l'axe 2 en rotation jusqu'à venir radialement en appui contre l'axe 2 pour former les collerettes 8 et 11 en repoussant de la matière constitutive de l'axe 2 selon la direction longitudinale I-I de l'axe 2, en utilisant en l'espèce une molette 14 à profil transversal convexe en V (figures 3 et 4),
d) creuser dans le tronçon intermédiaire à section transversale circulaire 13 une gorge de rupture 7 conformée et dimensionnée pour se rompre une fois atteint le couple de serrage prédéterminé (figure 5).

Lors de l'étape b1), on vient ainsi briser les angles du tronçon cylindrique 12 à section transversale hexagonale pour parvenir à un tronçon intermédiaire à section transversale circulaire 13 sur laquelle la molette 14 (ou roulette) pourra venir rouler sans subir de chocs susceptibles de la détériorer.

On définit simultanément, de part et d'autre du tronçon intermédiaire à section transversale circulaire 13, ce qui constituera la tête de serrage 5 et la tête de desserrage 4 (voir figure 4) dont les surfaces latérales respectives à six faces latérales 10 sont ainsi directement issues de la surface latérale du tronçon cylindrique 12 à section transversale hexagonale sans que cela nécessite de retrait de matière.

Lors de l'étape c) (figures 3 et 4), la molette 14 est pressée radialement contre l'axe 2 pour y former une gorge 15 en repoussant la matière constitutive de l'axe 2 de part et d'autre de la molette 14. Pour ce faire, la molette 14 présente un profil transversal symétrique qui est ici en V.

L'une des faces de la molette 14 repousse ainsi de la matière constitutive de l'axe 2 selon la direction longitudinale I-I et en direction de la tête de serrage 5 pour former la collerette 8. Simultanément, la face opposée de la molette 14 repousse de la matière constitutive de l'axe 2 selon la direction longitudinale I-I vers la tête de desserrage 4, ce qui aboutit à la formation de la collerette 11. La molette 14 travaille ainsi de façon quasi symétrique, c'est-à-dire en étant soumise à des forces s'exerçant selon la direction longitudinale I-I de sens opposés et d'intensités quasi identiques. Cela limite les risques de mise en vibration de la molette 14 qui peut conduire à un usinage défectueux et/ou à une détérioration de la molette 14.

Lors de l'étape b) (figure 5), la gorge de rupture 7 est creusée dans l'axe 2 à une distance d de la collerette 11 en matière repoussée à l'aide d'une plaquette d'usinage 16. Cela permet de creuser la gorge de rupture 7 dans une portion du tronçon intermédiaire 6 n'ayant pas ou peu subi de contraintes lors de la formation de la gorge 15 et des collerettes 8 et 11, et qui n'est donc que très peu voire aucunement écrouie. Cela limite l'usure de la plaquette d'usinage 16.

L'usinage de la variante de vis 1 illustrée sur la figure 8 est similaire, à ceci près que le creusement de la gorge de rupture 7 est effectué au droit de la collerette 11 qui a par conséquent disparu. De ce fait, il est possible, lors de l'étape b1) de former sur le tronçon cylindrique 12 un tronçon intermédiaire à section transversale circulaire 13 de longueur L plus réduite (figure 2), de sorte que la vis 1 peut présenter une longueur totale plus courte pour les cas d'utilisation où un plus faible encombrement longitudinal de la vis 1 est nécessaire.

L'usinage d'autres variantes est possible à l'aide d'un procédé de fabrication similaire, comme illustré par la figure 9, en formant les collerettes 8 et 11 (avec une mollette 14 comme sur les figures 3 et 4) à l'écart de la tête de serrage 5 et de la tête de desserrage 4, puis en creusant une gorge de rupture 7 (avec une plaquette d'usinage 16 comme sur la figure 5) entre la tête de serrage 5 et la collerette 8, au droit de la collerette 8 (en venant éliminer la collerette 8), au droit de la collerette 11 (en venant éliminer la collerette 11) ou entre la collerette 11 et la tête de desserrage 4.

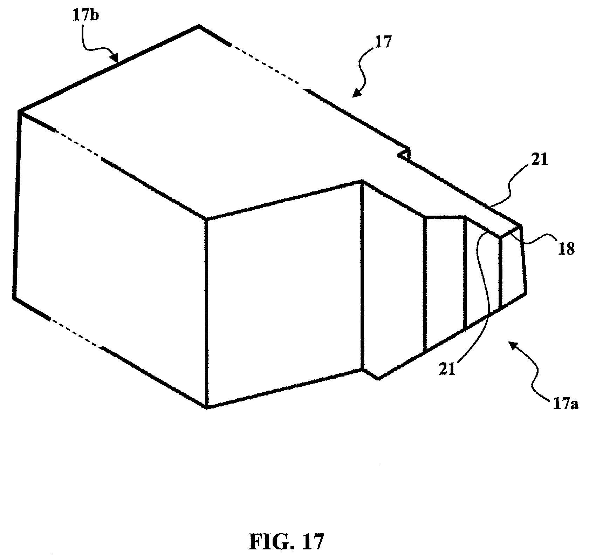

Le procédé de fabrication de la vis 1 illustrée sur les figures 13 et 14 va désormais être expliqué plus en détail à l'aide des figures 10 à 12, 16 et 17.

Lors de ce deuxième mode de réalisation de procédé de fabrication, on exécute, sur la figure 10, les étapes a) et b) de façon conforme à ce qui a été expliqué précédemment à l'aide de la figure 1.

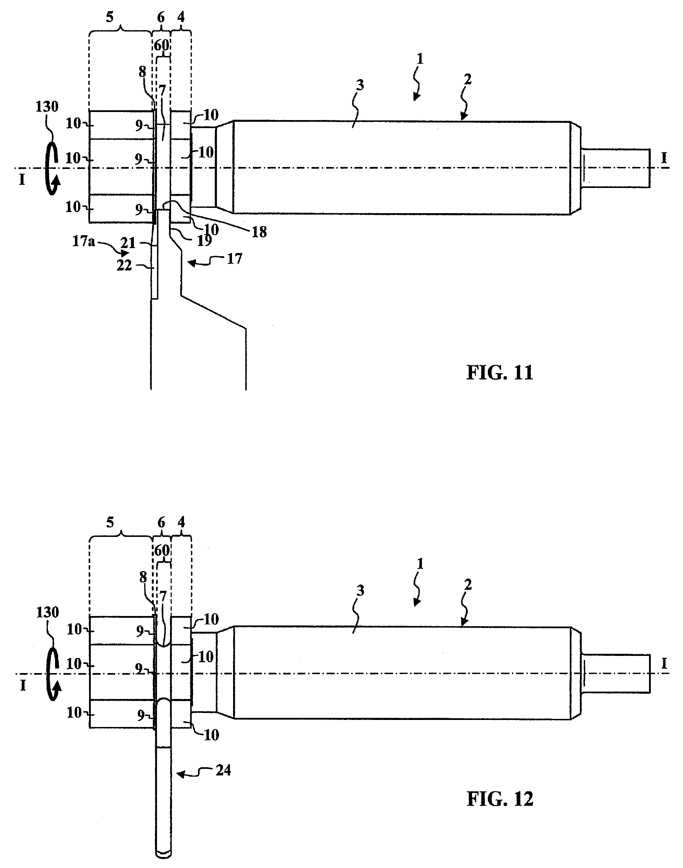

Ce procédé se distingue du précédent en ce qu'on creuse la gorge de rupture 7 en même temps qu'on forme la collerette 8 en repoussant de la matière constitutive de l'axe 2 selon la direction longitudinale I-I de l'axe 2 (figure 11).

Simultanément, on définit, de part et d'autre du tronçon intermédiaire à section transversale circulaire 13, ce qui constituera la tête de serrage 5 et la tête de desserrage 4 (voir figure 4) dont les surfaces latérales respectives à six faces latérales 10 sont ainsi directement issues de la surface latérale du tronçon cylindrique 12 à section transversale hexagonale sans que cela nécessite de retrait de matière.

Pour ce faire, on utilise un outil 17 combiné d'usinage tel qu'illustré sur les figures 10, 11, 16 et 17. Cet outil 17 comprend une extrémité distale 17a à profil longitudinal sensiblement en U comportant :
- une arête distale de coupe 18,
- d'un premier côté de l'arête distale de coupe 18, une arête latérale de coupe 19 s'étendant en direction d'une extrémité proximale 17b d'outil 17,
- de l'autre côté de l'arête distale de coupe 18, une arête latérale 21 s'étendant en direction de l'extrémité proximale 17b d'outil 17, et depuis laquelle s'étend une facette latérale 22 de repoussage de matière.

Pour repousser la matière, la facette latérale 22 présente un angle de dépouille A1 négatif.

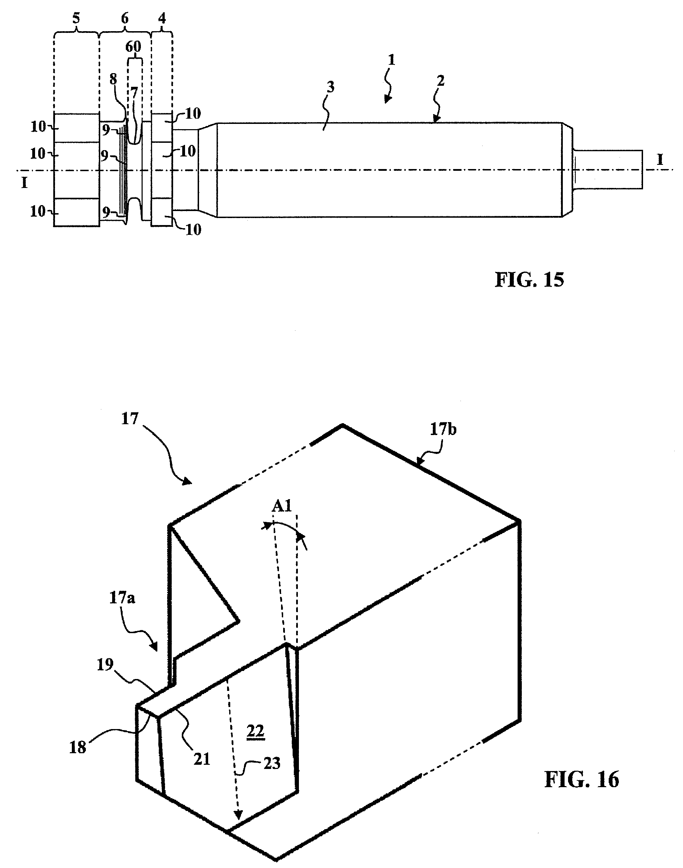

Grâce à cet angle de dépouille A1 négatif, la matière constitutive du tronçon intermédiaire 6 est progressivement repoussée par la facette latérale 22 selon l'exemple de trajectoire 23 illustré sur la figure 16. Le repoussage de matière s'effectue en même temps que les arêtes distale de coupe 18 et latérale de coupe 19 forment la gorge de rupture 7 illustrée sur la figure 11.

Après que la collerette 8 ait été formée par repoussage de matière selon la direction longitudinale I-I vers la tête de serrage 5 (figure 11), on peut éventuellement poursuivre et achever le dimensionnement précis de la gorge de rupture 7 en utilisant une plaquette d'usinage 24 comme illustré sur la figure 12. Lors de son utilisation, la plaquette d'usinage 24 laisse intacte la collerette 8. La gorge de rupture 7 peut toutefois être conformée et dimensionnée de façon satisfaisante par la seule utilisation de l'outil 17 utilisé lors de l'étape c).

Sur les figures 13 et 14, la collerette 8 est adjacente à la tête de serrage 5. On peut toutefois « inverser » le tronçon intermédiaire 6 selon la direction longitudinale I-I en réalisant la collerette 8 adjacente à la tête de desserrage 4.

L'usinage de la variante de vis 1 illustrée sur la figure 15 est similaire, à ceci près que, avant d'effectuer l'étape c) illustrée par la figure 11, on forme sur le tronçon cylindrique 12 un tronçon intermédiaire à section transversale circulaire 13 de façon similaire à ce qui a été expliqué à l'aide de la figure 2. Le creusement de la gorge de rupture 7 est ensuite effectué sur le tronçon intermédiaire à section transversale circulaire 13 et à distance de la tête de serrage 5 et de la tête de desserrage 4.

Sur la figure 15, la collerette 8 est située entre la tête de serrage 5 et la gorge de rupture 7. On peut toutefois « inverser » le tronçon intermédiaire 6 selon la direction longitudinale I-I en réalisant la collerette 8 entre la tête de desserrage 4 et la gorge de rupture 7.

L'invention n'est pas limitée à des têtes de desserrage 4 et de serrage 5 à sections transversales hexagonales, celles-ci pouvant présenter des sections transversales de toute forme non circulaire, polygonale ou non, adaptée pour permettre leur entraînement à l'aide d'un outil de vissage ou de dévissage.

L'invention n'est pas non plus limitée à une vis 1 munie d'un unique tronçon intermédiaire 6 à portion ruptible 60. Il est en effet possible de prévoir une pluralité de têtes de serrage séparées chacune les unes des autres par des tronçons intermédiaires 6 ayant chacune une portion ruptible 60, les portions ruptibles 60 étant conformées et dimensionnées pour se rompre une fois atteints des couples de serrage prédéterminés différents.

La présente invention n'est pas limitée aux modes de réalisation qui ont été explicitement décrits, mais elle en inclut les diverses variantes et généralisations contenues dans le domaine des revendications ci-après.

## Revendications

1. Vis (1) à couple de serrage limité fabriquée en un matériau malléable et comportant, sur un même axe (2), une tige filetée (3), une tête de desserrage (4) cylindrique à section transversale destinée à coopérer avec un outil pour permettre le desserrage de la vis, et une tête de serrage (5) cylindrique à section transversale destinée à coopérer avec un outil pour permettre le serrage de la vis (1) jusqu'à un couple de serrage prédéterminé, la tête de desserrage (4) et la tête de serrage (5) étant séparées l'une de l'autre par un tronçon intermédiaire (6) à portion ruptible (60) conformée et dimensionnée pour se rompre une fois atteint le couple de serrage prédéterminé, dans laquelle :
- la tête de desserrage (4) et la tête de serrage (5) ont des sections transversales extérieures non circulaires et de mêmes dimensions,
- la tête de desserrage (4) et la tête de serrage (5) ont des surfaces latérales respectives situées en correspondance les unes des autres,
**caractérisée en ce que** :
- le tronçon intermédiaire (6) comporte au moins une collerette (8) continue ou discontinue en ledit matériau malléable repoussé,
- ladite au moins une collerette (8) présente des dépassements (9) s'étendant radialement au-delà de la section transversale de la tête de desserrage (4) et de la tête de serrage (5),
- les dépassements (9) sont répartis de façon régulière selon toute la périphérie du tronçon intermédiaire (6).

2. Vis (1) selon la revendication 1, **caractérisée en ce que** la vis (1) est fabriquée en métal.

3. Vis (1) selon l'une des revendications 1 ou 2, **caractérisée en ce que** la tête de desserrage (4) et la tête de serrage (5) ont des sections transversales extérieures hexagonales.

4. Vis (1) selon l'une quelconque des revendications 1 à 3, **caractérisée en ce que** la collerette (8) est en matériau malléable repoussé selon la direction longitudinale (I-I) de l'axe (2).

5. Procédé de fabrication d'une vis (1) selon l'une quelconque des revendications 1 à 4, **caractérisé en ce qu'**il comporte les étapes suivantes :
a) fournir un axe (2) muni d'un tronçon cylindrique (12) à section transversale non circulaire et à surface latérale destinée à constituer les surfaces latérales de la tête de desserrage (4) et de la tête de serrage (5),
b) mettre en rotation ledit axe (2) selon sa direction longitudinale (I-I),
c) approcher radialement un outil (14, 17) contre l'axe (2) en rotation jusqu'à venir radialement en appui contre l'axe (2) pour former la collerette (8) en repoussant de la matière constitutive de l'axe (2) selon la direction longitudinale (I-I) de l'axe (2).

6. Procédé selon la revendication 5, **caractérisé en ce qu'**il comporte, entre les étapes b) et c), une étape b1) au cours de laquelle on forme, sur le tronçon cylindrique (12) destiné à constituer la tête de desserrage (4) et la tête de serrage (5), un tronçon intermédiaire à section transversale circulaire (13).

7. Procédé selon la revendication 6, **caractérisé en ce que**, lors de l'étape c), on utilise une molette (14) à profil transversal convexe qui est pressée radialement contre l'axe (2) pour y former une gorge (15) en repoussant de la matière constitutive de l'axe (2) d'un côté au moins de ladite gorge (15).

8. Procédé selon la revendication 7, **caractérisé en ce que**, lors de l'étape c), de la matière constitutive de l'axe (2) est repoussée de part et d'autre de la molette (14), qui présente de préférence un profil transversal en V.

9. Procédé selon l'une des revendications 7 ou 8, **caractérisé en ce qu'**on creuse dans le tronçon intermédiaire à section transversale circulaire (13), lors d'une étape ultérieure d), une gorge de rupture (7) conformée et dimensionnée pour se rompre une fois atteint le couple de serrage prédéterminé.

10. Procédé selon la revendication 9, **caractérisé en ce que** la gorge de rupture (7) est creusée dans l'axe (2) à distance (d) de la matière repoussée.

11. Procédé selon l'une des revendications 5 ou 6, **caractérisé en ce que**, lors du repoussage de l'étape c), on creuse simultanément une gorge de rupture (7) conformée et dimensionnée pour se rompre une fois atteint le couple de serrage prédéterminé.

12. Procédé selon l'une des revendications 5, 6 ou 11, **caractérisé en ce que**, lors de l'étape c), on utilise un outil (17) combiné d'usinage comprenant une extrémité distale (17a) à profil longitudinal sensiblement en U comportant :
- une arête distale de coupe (18),
- d'un premier côté de l'arête distale de coupe (18), une arête latérale de coupe (19) s'étendant en direction d'une extrémité proximale (17b) d'outil (17),
- de l'autre côté de l'arête distale de coupe (18), une arête latérale (21) s'étendant en direction de l'extrémité proximale (17b) d'outil (17), et depuis laquelle s'étend une facette latérale (22) de repoussage de matière.

13. Outil (17) combiné d'usinage pour la mise en oeuvre du procédé selon l'une des revendications 11 ou 12, **caractérisé en ce qu'**il comprend une extrémité distale (17a) à profil longitudinal sensiblement en U comportant :
- une arête distale de coupe (18),
- d'un premier côté de l'arête distale de coupe (18), une arête latérale de coupe (19) s'étendant en direction d'une extrémité proximale (17b) d'outil (17),
- de l'autre côté de l'arête distale de coupe (18), une arête latérale (21) s'étendant en direction de l'extrémité proximale (17b) d'outil (17), et depuis laquelle s'étend une facette latérale (22) de repoussage de matière.

14. Outil (17) combiné d'usinage selon la revendication 13, **caractérisé en ce que** la facette latérale (22) de repoussage de matière présente un angle de dépouille (A1) négatif.

## Patentansprüche

1. Schraube (1) mit begrenztem Anzugsdrehmoment, hergestellt aus einem formbaren Werkstoff und umfassend einen Gewindeschaft (3) auf ein und derselben Achse (2), einen zylindrischen Ausspannkopf (4) mit einem Querschnitt, der für ein Zusammenwirken mit einem Werkzeug zum Lösen der Schraube ausgebildet ist, und einen zylindrischen Spannkopf (5) mit einem Querschnitt, der für ein Zusammenwirken mit einem Werkzeug zum Einspannen der Schraube (1) bis zu einem vorbestimmten Anzugsdrehmoment ausgebildet ist, wobei der Ausspannkopf (4) und der Spannkopf (5) voneinander getrennt sind durch einen Zwischenabschnitt (6) mit einem zerstörbaren Teil (60), der so ausgebildet und dimensioniert ist, dass er bei Erreichen des vorbestimmten Anzugsdrehmomentes bricht, wobei in der Schraube :
- der Ausspannkopf (4) und der Spannkopf (5) nicht kreisförmige Außenquerschnitte gleicher Abmessungen haben und
- der Ausspannkopf (4) sowie der Spannkopf (5) entsprechende Seitenflächen in miteinander übereinstimmenden Ebenen haben,
**dadurch gekennzeichnet, dass**
- der Zwischenabschnitt (6) wenigstens einen durchlaufenden oder unterbrochenen Kragen (8) aus demselben formbaren, getriebenen Werkstoff hat,
- der wenigstens eine Kragen (8) Vorsprünge (9) hat, die radial über den Querschnitt des Ausspannkopfes (4) und des Spannkopfes (5) vorstehen,
- die Vorsprünge (9) gleichmäßig über den gesamten Umfang des Zwischenabschnittes (6) verteilt sind.

2. Schraube (1) nach Anspruch 1, **dadurch gekennzeichnet, dass** die Schraube (1) aus Metall hergestellt ist.

3. Schraube (1) nach Anspruch 1 oder 2, **dadurch gekennzeichnet, dass** der Ausspannkopf (4) und der Spannkopf (5) sechseckige Außenquerschnitte haben.

4. Schraube (1) nach einem der Ansprüche 1 bis 3, **dadurch gekennzeichnet, dass** der Kragen (8) aus formbarem Werkstoff besteht, der in Längsrichtung (I-I) der Achse (2) gedrückt ist.

5. Verfahren zum Herstellen einer Schraube (1) nach einem der Ansprüche 1 bis 4, **gekennzeichnet durch** die folgenden Schritte :
a) bereitstellen einer Achse (2), die einen zylindrischen Abschnitt (12) mit nicht kreisförmigem Querschnitt und mit einer Seitenfläche hat, die so ausgebildet ist, dass sie die Seitenflächen des Ausspannkopfes (4) und des Spannkopfes (5) bildet,
b) drehen der Achse (2) um die Längsrichtung (I-I),
c) vorschieben eines Werkzeugs (14, 17) radial gegen die rotierende Achse (2), bis es radial zum Anschlag an der Achse (2) kommt, um **dadurch** den Kragen (8) zu formen, indem es den die Achse (2) bildenden Werkstoff in der Längsrichtung (I-I) der Achse (2) drückt.

6. Verfahren nach Anspruch 5, **dadurch gekennzeichnet, dass** zwischen den Schritten b) und c) ein Schritt b1) vorgesehen ist, durch den auf dem zylindrischen Abschnitt (12) zur Bildung des Ausspannkopfes (4) und des Spannkopfes (5) ein Zwischenabschnitt (13) mit kreisförmigem Querschnitt geformt wird.

7. Verfahren nach Anspruch 6, **dadurch gekennzeichnet, dass** für den Schritt c) ein Formrad (14) mit convexem Querschnittsprofil radial gegen die Achse (2) gedrückt wird, um an dieser eine Rille (15) auszubilden, wobei der die Achse (2) bildende Werkstoff in Richtung auf wenigstens eine Seite der Rille (15) gedrückt wird.

8. Verfahren nach Anspruch 7, **dadurch gekennzeichnet, dass** bei dem Schritt c) der die Achse (2) bildende Werkstoff nach der einen und nach der anderen Seite des Formrades (14) gedrückt wird, das vorzugsweise einen V-förmigen Querschnitt hat.

9. Verfahren nach Anspruch 7 oder 8, **dadurch gekennzeichnet, dass** in einem weiteren Schritt d) in den Zwischenabschnitt (13) kreisförmigen Querschnitts eine Brucheinschnürung (7) herausgearbeitet wird, die so ausgebildet und dimensioniert ist, dass sie bei Erreichen des vorbestimmten Anzugsdrehmomentes bricht.

10. Verfahren nach Anspruch 9, **dadurch gekennzeichnet, dass** die Brucheinschnürung (7) in die Achse (2) mit einem Abstand (d) von dem zurückgedrücktem Werkstoff eingearbeitet wird.

11. Verfahren nach Anspruch 5 oder 6, **dadurch gekennzeichnet, dass** beim Drücken gemäß Schritt (c) gleichzeitig eine Brucheinschnürung (7) herausgearbeitet wird, die so ausgebildet und dimensioniert ist, dass sie bei Erreichen des vorbestimmten Anzugsdrehmomentes bricht.

12. Verfahren nach einem der Ansprüche 5, 6 oder 11, **dadurch gekennzeichnet, dass** für den Schritt c) ein kombiniertes Bearbeitungswerkzeug (17) mit einem distalen Ende (17a) mit im wesentlichen U-förmigem Längsprofil eingesetzt wird, umfassend :
- eine distale Schneidkante (18),
- auf einer ersten Seite der distalen Schneidkante (18) eine seitliche Schneidkante (19), die sich in Richtung auf ein proximales Ende (17b) des Werkzeugs (17) erstreckt,
- auf der anderen Seite der distalen Schneidkante (18) eine seitliche Schneidkante (21), die sich in Richtung auf das proximale Ende (17b) des Werkzeugs (17) erstreckt und von der eine seitliche Fläche (22) zum Drücken des Werkstoffs ausgeht.

13. Kombiniertes Bearbeitungswerkzeug (17) zur Durchführung des Verfahrens nach Anspruch 11 oder 12, **dadurch gekennzeichnet, dass** es ein distales Ende (17a) mit im wesentlichen U-förmigem Längsprofil hat, umfassend :
- eine distale Schneidkante (18),
- auf einer ersten Seite der distalen Schneidkante (18) eine seitliche Schneidkante (19), die sich in Richtung auf ein proximales Ende (17b) des Werkzeugs (17) erstreckt,
- auf der anderen Seite der distalen Schneidkante (18) eine Seitenkante (21), die sich in Richtung auf das proximale Ende (17b) des Werkzeugs (17) erstreckt und von der eine seitliche Fläche (22) zum Drücken des Werkstoffs ausgeht.

14. Kombiniertes Bearbeitungswerkzeug (17) nach Anspruch 13, **dadurch gekennzeichnet, dass** die seitliche Fläche (22) zum Drücken des Werkstoffs einen negativen Freiwinkel (A1) hat.

## Claims

1. Screw (1) with limited torque that is made of a malleable material and comprises, on one and the same shaft (2), a threaded shank (3), a cylindrical loosening head (4) with a cross section intended to cooperate with a tool to enable the screw to be loosened, and a cylindrical tightening head (5) with a cross section intended to cooperate with a tool to enable the screw (1) to be tightened to a predetermined torque, the loosening head (4) and the tightening head (5) being separated from one another by an intermediate section (6) with a rupturable portion (60) configured and dimensioned to break once the predetermined torque has been reached, in which screw:
- the loosening head (4) and the tightening head (5) have non-circular outer cross sections of the same dimensions,
- the loosening head (4) and the tightening head (5) have respective lateral surfaces situated in correspondence with one another,
**characterised in that**:
- the intermediate section (6) comprises at least one continuous or discontinuous flange (8) made of the said upset malleable material,
- the said at least one flange (8) has projections (9) extending radially beyond the cross section of the loosening head (4) and of the tightening head (5),
- the projections (9) are distributed in a regular manner about the entire periphery of the intermediate section (6).

2. Screw (1) according to claim 1, **characterised in that** the screw (1) is made of metal.

3. Screw (1) according to either of claims 1 and 2, **characterised in that** the loosening head (4) and the tightening head (5) have hexagonal outer cross sections.

4. Screw (1) according to any one of claims 1 to 3, **characterised in that** the flange (8) is made of malleable material upset in the longitudinal direction (I-I) of the shaft (2).

5. Method for making a screw (1) according to any one of claims 1 to 4, **characterised in that** it comprises the following steps:
(a) supplying a shaft (2) provided with a cylindrical section (12) with a non-circular cross section and with a lateral surface intended to constitute the laterals surfaces of the loosening head (4) and of the tightening head (5),
(b) rotating the said shaft (2) about its longitudinal direction (I-I),
(c) bringing a tool (14, 17) radially up towards the rotating shaft (2) until it bears radially against the shaft (2) to form the flange (8) while upsetting the material constituting the shaft (2) in the longitudinal direction (I-I) of the shaft (2).

6. Method according to claim 5, **characterised in that** it comprises, between the steps b) and c), a step b1) during which an intermediate section (13) with a circular cross section is formed on the cylindrical section (12) intended to constitute the loosening head (4) and the tightening head (5).

7. Method according to claim 6, **characterised in that**, during the step c), use is made of a wheel (14) with a convex transverse profile that is pressed radially against the shaft (2) to form a groove (15) therein while upsetting the material constituting the shaft (2) on at least one side of the said groove (15).

8. Method according to claim 7, **characterised in that**, during the step c), material constituting the shaft (2) is upset on either side of the wheel (14), which preferably has a V-shaped transverse profile.

9. Method according to either of claims 7 and 8, **characterised in that**, during a subsequent step d), a rupture groove (7) configured and dimensioned to break once the predetermined torque has been reached is cut into the intermediate section (13) with a circular cross section.

10. Method according to claim 9, **characterised in that** the rupture groove (7) is cut into the shaft (2) at a distance (d) from the upset material.

11. Method according to either of claims 5 and 6, **characterised in that**, during the upsetting process of the step c), there is simultaneously cut a rupture groove (7) configured and dimensioned to break once the predetermined torque has been reached.

12. Method according to one of claims 5, 6 and 11, **characterised in that**, during the step c), use is made of a combined machining tool (17) comprising a distal end (17a) with a substantially U-shaped longitudinal profile having:
- a distal cutting edge (18),
- on a first side of the distal cutting edge (18), a lateral cutting edge (19) extending in the direction of a proximal end (17b) of the tool (17),
- on the other side of the distal cutting edge (18), a lateral edge (21) extending in the direction of the proximal end (17b) of the tool (17), and from which there extends a lateral material-upsetting facet (22).

13. Combined machining tool (17) for implementing the method according to either of claims 11 and 12, **characterised in that** it comprises a distal end (17a) with a substantially U-shaped longitudinal profile having:
- a distal cutting edge (18),
- on a first side of the distal cutting edge (18), a lateral cutting edge (19) extending in the direction of a proximal end (17b) of the tool (17),
- on the other side of the distal cutting edge (18), a lateral edge (21) extending in the direction of the proximal end (17b) of the tool (17), and from which there extends a lateral material-upsetting facet (22).

14. Combined machining tool (17) according to claim 13, **characterised in that** the lateral material-upsetting facet (22) has a negative relief angle (A1).
